# EUROPEAN PATENT APPLICATION

(11) **EP 4 738 502 A1**
(43) Date of publication of application: **06.05.2026**
(21) Application number: 25827231.9
(22) Date of filing: 04.04.2025
(51) Int. Cl.: H01M 10/04, H01M 10/058

(54) **SECONDARY BATTERY PRESSING DEVICE AND SECONDARY BATTERY PRESSING METHOD USING SAME**

(30) Priority: 27.06.2024 KR 20240084227
(71) Applicant: LG Energy Solution, Ltd., Seoul 07335 (KR)
(72) Inventor: YOON, Tae Keon, Daejeon 34122 (KR)
(74) Representative: Plasseraud IP
(86) International application number: PCT/KR2025/004549
(87) International publication number: WO 2026/005218

(57) **Abstract**

Disclosed are a secondary battery pressing apparatus for pressing a secondary battery including a battery case configured to receive an electrode assembly having a pair of electrode leads located opposite each other and a sealed portion provided at an edge of the battery case, the secondary battery pressing apparatus including a pair of pressing plates located on one side and the other side of the battery case, a pair of tight contact plates configured to be brought into tight contact with the battery case by the pair of pressing plates, and a pair of tight contact members configured to be brought into tight contact with a corner portion of the battery case by the pair of pressing plates, and a pressing method using the same.

## Description

### [Technical Field]

This application claims the benefit of priority to Korean Patent Application No. 10-2024-0084227 filed on June 27, 2024, the disclosure of which is incorporated herein by reference in its entirety.

The present invention relates to a secondary battery pressing apparatus and a secondary battery pressing method using the same, and more particularly to a secondary battery pressing apparatus capable of uniformly pressing the entirety of a secondary battery and a secondary battery pressing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical pouch-shaped secondary battery manufacturing process includes inserting an electrode assembly into a receiving space of a battery case made of a laminate sheet, filling the battery case with an electrolyte solution, sealing the battery case, and performing an activation process, wherein a formation jig configured to press a battery cell is used in the activation process.

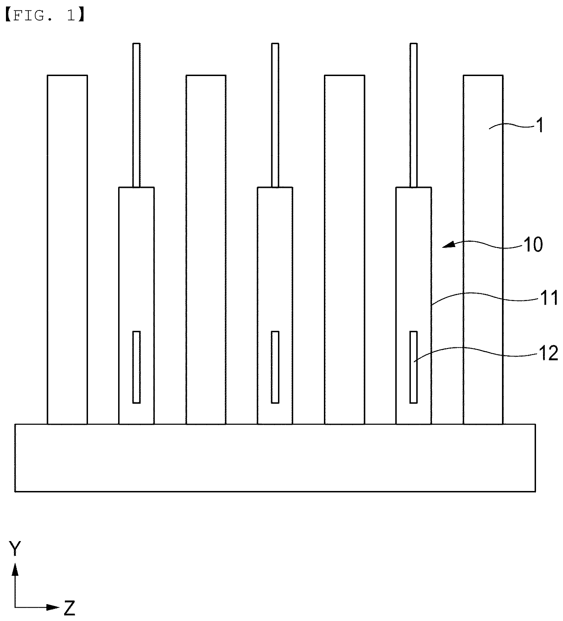

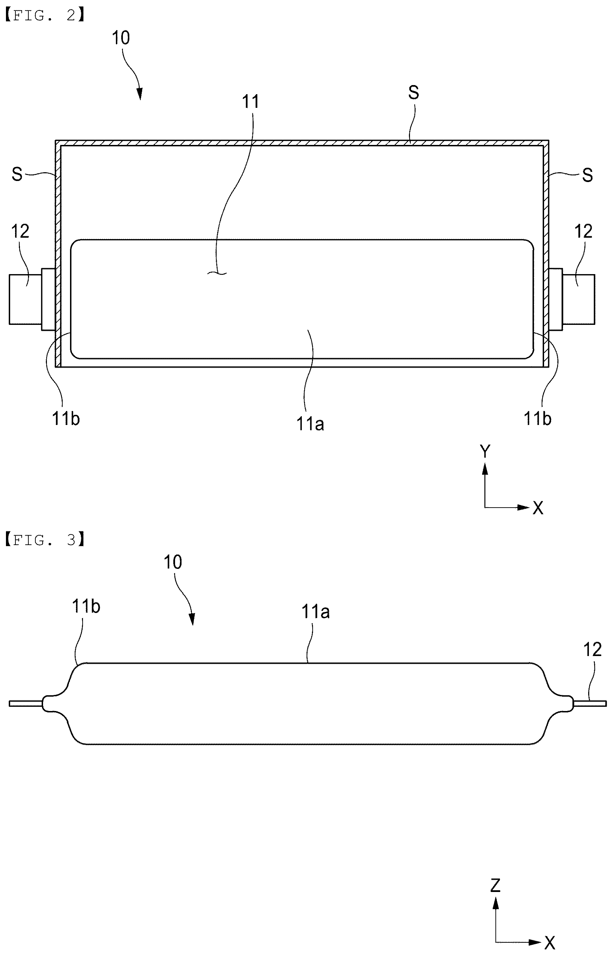

FIG. 1 is a conceptual view showing a part of a conventional pouch-shaped secondary battery pressing apparatus, FIG. 2 is a plan view illustrating a conventional pouch-shaped secondary battery, and FIG. 3 is a side view illustrating the conventional pouch-shaped secondary battery.

As shown in FIGs. 1 to 3, an activation process of a secondary battery 10 may be performed by pressing the secondary battery 10 disposed between a plurality of pressing plates 1 using the pressing plates 1.

However, in manufacturing an electrode constituting an electrode assembly, an electrode material is coated in a slurry state, wherein a so-called sliding region of the electrode in which a central portion of the electrode is flat while ends of the electrode become thinner due to fluidity of the slurry may be formed.

Due to the sliding region, the secondary battery 10 has a thickness deviation between a central portion and the vicinity of a tab portion thereof, forming a step, and uneven pressure is applied due to the step during the process using the formation jig, whereby quantified pressing is not possible.

### (Prior Art Document)

(Patent Document 1) Korean Patent Application Publication No. 10-2024-0044781

### [Disclosure]

### [Technical Problem]

The present invention has been made in view of the above problems, and it is an object of the present invention to provide a secondary battery pressing apparatus capable of uniformly applying pressure to a central portion and the vicinity of a tab portion of a pouch-shaped secondary battery during an activation process and a secondary battery pressing method using the same.

### [Technical Solution]

As a technical means for achieving the above object, a secondary battery pressing apparatus according to an embodiment of the present invention, which is a secondary battery pressing apparatus for pressing a secondary battery including a battery case (11) configured to receive an electrode assembly having a pair of electrode leads (12) located opposite each other and a sealed portion (S) provided at an edge of the battery case (11), includes a pair of pressing plates (100) located on one side and the other side of the battery case (11), a pair of tight contact plates (200) configured to be brought into tight contact with the battery case (11) by the pair of pressing plates (100), and a pair of tight contact members (300) configured to be brought into tight contact with a corner portion (11b) of the battery case (11) by the pair of pressing plates (100).

Also, in the secondary battery pressing apparatus according to the embodiment of the present invention, each of the pair of tight contact members (300) may be made of a shape-memory alloy.

Also, in the secondary battery pressing apparatus according to the embodiment of the present invention, the shape-memory alloy may include Cu, Zn, and Al materials.

Also, in the secondary battery pressing apparatus according to the embodiment of the present invention, the pair of tight contact plates (200) may include a first tight contact plate (210) and a second tight contact plate (220) located facing one surface and the other surface of the battery case (11), respectively, and the pair of tight contact members (300) may include a first tight contact member (310) and a second tight contact member (320) provided respectively at the first tight contact plate (210) and the second tight contact plate (220) so as to face the one surface and the other surface of the battery case (11), respectively.

Also, in the secondary battery pressing apparatus according to the embodiment of the present invention, the first tight contact member (310) may include a 1a member (311) fixed to the first tight contact plate (210) so as to be in tight contact with the corner portion (11b) located on one side, which is a part of the corner portion (11b) formed on the one surface of the battery case (11), and a 1b member (312) configured to be brought into tight contact with the corner portion (11b) located on the other side, which is a part of the corner portion (11b) formed on the one surface of the battery case (11), the 1b member being movable in a longitudinal direction of the 1a member (311).

Also, in the secondary battery pressing apparatus according to the embodiment of the present invention, each of the 1a member (311) and the 1b member (312) may be formed in a quadrangular frame shape, and the thickness of a side frame of each of the 1a member (311) and the 1b member (312) in tight contact with the corner portion (11b) may be greater than or equal to the thickness of the corner portion (11b).

Also, in the secondary battery pressing apparatus according to the embodiment of the present invention, the first tight contact member (310) may further include a plurality of first fixing members (313) connected to the first tight contact plate (210), the plurality of first fixing members being configured to fix the 1a member (311) to the first tight contact plate (210), and a plurality of first connecting members (314) configured to connect the 1b member (312) to the first tight contact plate (210).

Also, in the secondary battery pressing apparatus according to the embodiment of the present invention, the second tight contact member (320) may include a 2a member (321) fixed to the second tight contact plate (220) so as to be in tight contact with the corner portion (11b) located on the one side, which is a part of the corner portion (11b) formed on the other surface of the battery case (11), and a 2b member (322) configured to be brought into tight contact with the corner portion (11b) located on the other side, which is a part of the corner portion (11b) formed on the other surface of the battery case (11), the 2b member being movable in a longitudinal direction of the 2a member (321).

Also, in the secondary battery pressing apparatus according to the embodiment of the present invention, each of the 2a member (321) and the 2b member (322) may be formed in a quadrangular frame shape, and the thickness of a side frame of each of the 2a member (321) and the 2b member (322) in tight contact with the corner portion (11b) may be greater than or equal to the thickness of the corner portion.

Also, in the secondary battery pressing apparatus according to the embodiment of the present invention, the second tight contact member (320) may further include a plurality of second fixing members (323) connected to the second tight contact plate(220) , the plurality of second fixing members being configured to fix the 2a member (321) to the second tight contact plate (220), and a plurality of second connecting members (324) configured to connect the 2b member (322) to the second tight contact plate (220).

Also, in the secondary battery pressing apparatus according to the embodiment of the present invention, the pair of tight contact plates (200) may include a first tight contact plate (210) configured to press the one surface of the battery case (11) and a second tight contact plate (220) configured to press the other surface of the battery case (11), and each of the first tight contact plate (210) and the second tight contact plate (220) may be made of a metal including an aluminum material.

In addition, a secondary battery pressing method using the secondary battery pressing apparatus according to the embodiment of the present invention includes (S1) locating a secondary battery (10) between the pair of tight contact plates (200), on inner surfaces of which the tight contact members (300) are provided, respectively, and (S2) moving the pair of pressing plates (100) to press the secondary battery (10).

Also, the secondary battery pressing method according to the embodiment of the present invention may further include heating the pair of tight contact members (300) to a preset first temperature range to shape-memory process the pair of tight contact members before step (S1).

Also, in the secondary battery pressing method according to the embodiment of the present invention, in step (S2), heating may be performed to a second temperature range lower than the first temperature range.

Also, the secondary battery pressing method according to the embodiment of the present invention may further include varying the length of each of the tight contact members (300) so as to correspond to the length of a first pocket portion of a battery case (11) configured to receive an electrode assembly before step (S2).

### [Advantageous Effects]

As is apparent from the above description, a secondary battery pressing apparatus according to the present invention and a secondary battery pressing method using the same have the advantage that a pair of tight contact members configured to be brought into tight contact with a corner portion of a battery case is made of a shape-memory alloy such that the tight contact members can press the corner portion with a shape deformed so as to correspond to the shape of the corner portion, whereby it is possible to press a flat portion and the corner portion of the secondary battery with uniform pressure.

In addition, the secondary battery pressing apparatus according to the present invention and the secondary battery pressing method using the same have the merit that the pair of tight contact members is configured to be variable in the overall length direction of the battery case such that the pair of tight contact members can be deformed so as to correspond to the length of the secondary battery, whereby it is possible to press various sizes of secondary batteries.

### [Description of Drawings]

FIG. 1 is a conceptual view showing a part of a conventional pouch-shaped secondary battery pressing apparatus.
FIG. 2 is a plan view illustrating a pouch-shaped secondary battery.
FIG. 3 is a side view illustrating the pouch-shaped secondary battery.
FIG. 4 is an exploded perspective view illustrating a secondary battery pressing apparatus according to the present invention.
FIG. 5 is a perspective view illustrating that a tight contact member is fixed to a tight contact plate of the secondary battery pressing apparatus according to the present invention.
FIG. 6 is a front view illustrating that the tight contact member is fixed to the tight contact plate of the secondary battery pressing apparatus according to the present invention.
FIG. 7 is a side view illustrating that the tight contact member is fixed to the tight contact plate of the secondary battery pressing apparatus according to the present invention.
FIG. 8 is a front view illustrating that the tight contact member fixed to the tight contact plate of the secondary battery pressing apparatus according to the present invention is varied.
FIG. 9 is a view showing the state in which the secondary battery pressing apparatus according to the present invention is located on one side and the other side of a secondary battery, when viewed from above.
FIG. 10 is a view showing that the length of the tight contact member of the secondary battery pressing apparatus according to the present invention is varied so as to correspond to the length of a first pocket portion of the secondary battery, when viewed from above.
FIG. 11 is a view showing that a pressing plate presses the tight contact plate and the tight contact member in the secondary battery pressing apparatus according to the present invention, when viewed from above.
FIG. 12 is a view showing that the tight contact member of the secondary battery pressing apparatus according to the present invention is brought into tight contact with a corner portion of a battery case of the secondary battery, when viewed from above.
FIG. 13 is a view showing that the tight contact member of the secondary battery pressing apparatus according to the present invention is pressed and deformed at the corner portion of the battery case, when viewed from above.
FIG. 14 is a cross-sectional view taken along line I-I shown in FIG. 4, illustrating that the tight contact member of the secondary battery pressing apparatus according to the present invention is pressed and deformed at the corner portion of the battery case, when viewed from above.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a secondary battery pressing apparatus according to the present invention and a pressing method using the same will be described.

First, referring to FIGs. 2 and 3, a secondary battery 10 may be a pouch-shaped secondary battery including a battery case 11 configured to receive an electrode assembly (not shown) having a pair of electrode leads 12 located opposite each other and a sealed portion S provided at an edge of the battery case 11. In this case, the battery case 11 may include a first pocket portion configured to receive the electrode assembly and a second pocket portion (not shown) configured to capture gas.

The pair of electrode leads 12 may include a positive electrode lead and a negative electrode lead.

Meanwhile, the battery case 11 is made of a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermallybonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

Meanwhile, the electrode assembly received in the battery case 11 may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It may be preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, in manufacturing the electrode constituting the electrode assembly, an electrode material is coated in a slurry state, wherein a so-called sliding region of the electrode may be formed in which a central portion of the electrode is flat while the edge of the electrode becomes thinner due to fluidity of the slurry.

Accordingly, the battery case 11 in which the electrode assembly is received may be provided with a flat portion 11a corresponding to the central portion of the electrode flatly coated with the slurry and a corner portion 11b formed so as to correspond to the sliding region of the electrode.

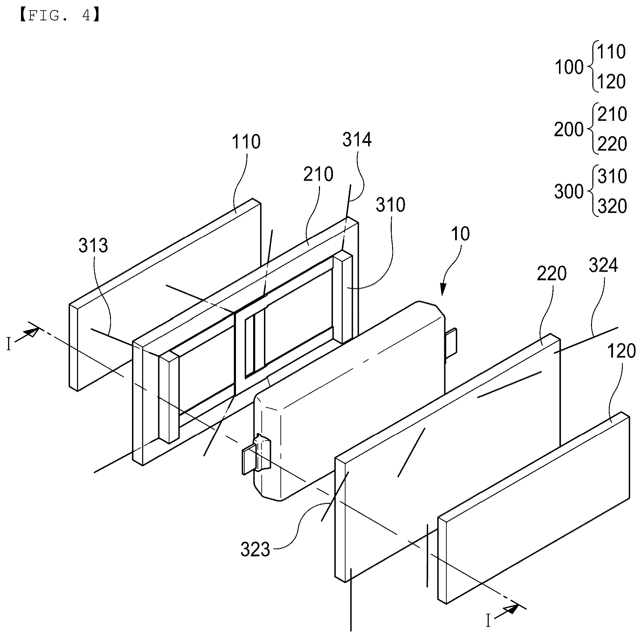

FIG. 4 is an exploded perspective view illustrating a secondary battery pressing apparatus according to the present invention.

A secondary battery pressing apparatus according to an embodiment of the present invention for pressing a secondary battery 10 having the aforementioned configuration may include a pair of pressing plates 100, a pair of tight contact plates 200, and a pair of tight contact members 300.

First, the pair of pressing plates 100 may be located on one side and the other side of a battery case 11 in the state in which the secondary battery 10 is located in a vertical direction (12 o'clock to 6 o'clock direction in FIG. 4).

In this case, the pair of pressing plates 100 may include a first pressing plate 110 configured to move toward one surface (10 o'clock direction in FIG. 4) of the battery case 11 and a second pressing plate 120 configured to move toward the other surface (4 o'clock direction in FIG. 4) of the battery case 11. Here, the first pressing plate 110 and the second pressing plate 120 may move toward the secondary battery 10 to apply pressing force to the secondary battery 10.

In addition, each of the first pressing plate 110 and the second pressing plate 120 may be made of a material having stiffness sufficient to press a corresponding one of one surface and the other surface of the battery case 11. More specifically, each of the first pressing plate 110 and the second pressing plate 120 may be made of a metal, e.g., a metal including an aluminum material.

The pair of tight contact plates 200 may be configured to be brought into tight contact with the battery case 11 by the pair of pressing plates 100. The pair of tight contact plates 200 may include a first tight contact plate 210 and a second tight contact plate 220 located facing one surface and the other surface of the battery case 11, respectively.

The first tight contact plate 210 may be pressed to the other side (4 o'clock direction in FIG. 4) by the first pressing plate 110, and may apply pressing force to one surface of the battery case 11. In addition, the second tight contact plate 220 may be pressed to one side (10 o'clock direction in FIG. 4) by the second pressing plate 120, and may apply pressing force to the other surface of the battery case 11. The first tight contact plate 210 and the second tight contact plate 220 may be configured to come into contact with each other in the state in which the secondary battery 10 is interposed therebetween.

In addition, each of the first tight contact plate 210 and the second tight contact plate 220 may be made of a material having stiffness sufficient to press a corresponding one of one surface and the other surface of the battery case 11. More specifically, each of the first tight contact plate 210 and the second tight contact plate 220 may be made of a metal, e.g., a metal including an aluminum material.

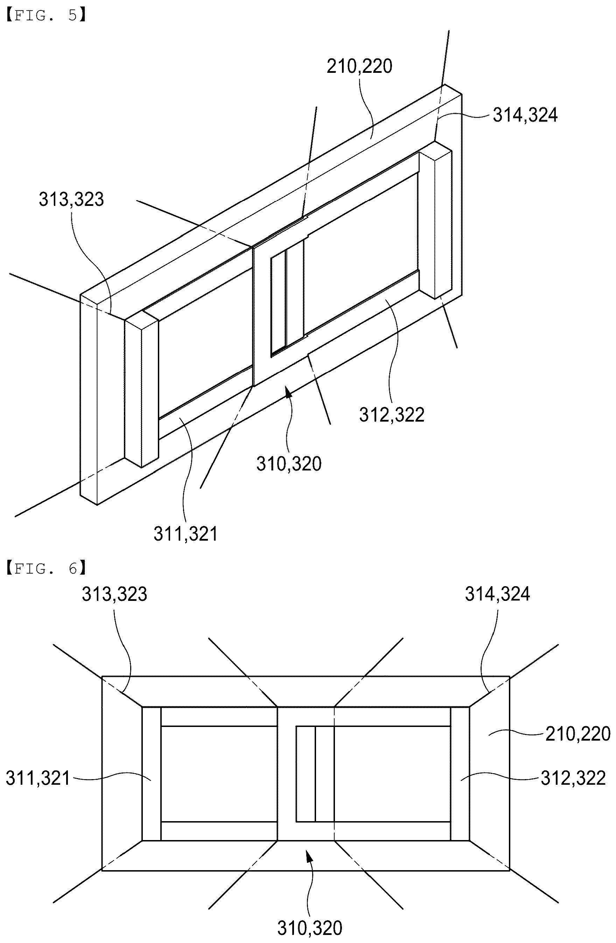

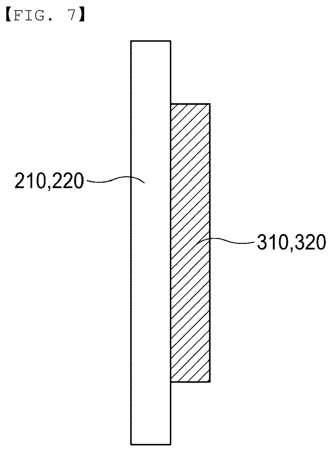

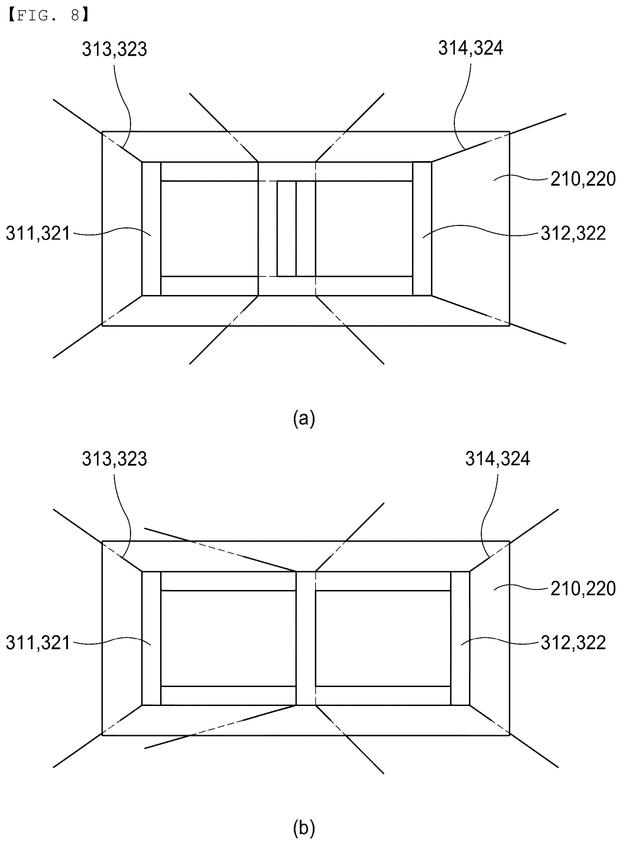

FIG. 5 is a perspective view illustrating that the tight contact member is fixed to the tight contact plate of the secondary battery pressing apparatus according to the present invention, and FIG. 6 is a front view illustrating that the tight contact member is fixed to the tight contact plate of the secondary battery pressing apparatus according to the present invention. In addition, FIG. 7 is a side view illustrating that the tight contact member is fixed to the tight contact plate of the secondary battery pressing apparatus according to the present invention, and FIG. 8 is a front view illustrating that the tight contact member fixed to the tight contact plate of the secondary battery pressing apparatus according to the present invention is varied.

Referring to FIGs. 4 to 8, the pair of tight contact members 300 may be configured to be brought into tight contact with the corner portion 11b of the battery case 11 by the pair of pressing plates 100. The pair of tight contact members 300 may include a first tight contact member 310 and a second tight contact member 320 provided respectively at the first tight contact plate 210 and the second tight contact plate 220 so as to face one surface and the other surface of the battery case 11, respectively.

First, the first tight contact member 310 may be provided at the other surface of the first tight contact plate 210 (4 o'clock direction in FIG. 4) so as to face one surface of the battery case 11. In addition, the first tight contact member 310 may be moved toward one surface of the battery case 11 together with the first tight contact plate 210 by the first pressing plate 110, and may be configured to be brought into tight contact with the corner portion 11b of one surface of the battery case 11.

More specifically, the first tight contact member 310 may include a 1a member 311 and a 1b member 312, each being formed in a quadrangular frame shape.

The 1a member 311 may be fixed to the first tight contact plate 210 so as to be in tight contact with the corner portion 11b located on one side (7 o'clock direction in FIG. 4), which is a part of the corner portion 11b formed on one surface (10 o'clock direction in FIG. 4) of the battery case 11. At this time, the 1a member 311 may be fixed to the first tight contact plate 210 via a first fixing member 313.

Specifically, the first fixing member 313 may be connected to the first tight contact plate 210 so as to fix the 1a member 311 to the first tight contact plate 210, and may be provided in plural. For example, one end of the first fixing member 313 may be connected to the 1a member 311 and the other end of the first fixing member may be connected to the other surface of the first tight contact plate 210 such that the 1a member 311 is fixed to the first tight contact plate 210. Here, the first fixing member 313 may, for example, be a wire member; however, the present invention is not necessarily limited thereto.

Accordingly, the 1a member 311 may be fixed to the first tight contact plate 210, and a side frame located on one side (7 o'clock direction in FIG. 4) of the 1a member 311 may be fixed at the position corresponding to the corner portion 11b located on one side, which is a part of the corner portion 11b formed on one surface of the battery case 11.

The thickness of the side frame located on one side of the 1a member 311 in tight contact with the corner portion 11b may be greater than or equal to the thickness of the corner portion 11b. Here, the thickness of the corner portion 11b may be the thickness from the sealed portion S of the edge of the battery case 11 to one surface of the first pocket portion of the battery case 11 (the thickness in the 12 to 6 o'clock direction in FIG. 3).

In addition, when the first tight contact member 310 is brought into tight contact with one surface of the battery case 11 to apply pressing force thereto, it may be preferable for the other frames (an upper surface frame, a lower surface frame, and the other side frame) of the 1a member 311, which are not in tight contact with the corner portion 11b, to have as small a thickness as possible such that the flat portion 11a of the battery case 11 is not locally excessively pressed thereby.

In addition, the 1b member 312 may be brought into tight contact with the corner portion 11b located on the other side (1 o'clock direction in FIG. 4), which is a part of the corner portion 11b formed on one surface (10 o'clock direction in FIG. 4) of the battery case 11, and may be movable in a longitudinal direction of the 1a member 311. Here, the longitudinal direction of the 1a member 311 corresponds to the overall length direction of the battery case 11.

The 1b member 312 may be moved in the longitudinal direction of the 1a member 311 so as to correspond to the length of the first pocket portion of the battery case 11 that receives the electrode assembly.

That is, the length of the first tight contact member 310 may be adjusted so as to correspond to the overall length of the first pocket portion of the battery case 11 through the distance between the 1a member 311 and the 1b member 312.

At this time, the 1b member 312 may be connected to a first connecting member 314 so as to be spaced apart from the 1a member 311. The first connecting member 314 may connect the 1b member 312 to the first tight contact plate 210, and may be provided in plural.

For example, one end of the first connecting member 314 may be connected to the 1b member 312, and the other end of the first connecting member may be connected to the other surface of the first tight contact plate 210. At this time, the 1b member 312 may be spaced apart from the 1a member 311 so as to correspond to the length of the other end of the first connecting member 314 that penetrates the other surface of the first tight contact plate 210.

More specifically, for example, the first connecting member 314 may apply tensile force to the first connecting member 314 so as to correspond to the overall length of the first pocket portion in order to adjust the distance between the 1a member 311 and the 1b member 312. In addition, for example, a first fixing block (not shown) may be provided at the other end of the first connecting member 314 such that the distance between the 1a member 311 and the 1b member 312 of the first tight contact member 310 is temporarily fixed. In this case, the first connecting member 314 may, for example, be a wire member.

Of course, the present invention is no limited to the above configurations as long as it is possible to move, support, and temporarily fix the 1b member 312 using the first connecting member 314.

Accordingly, the 1b member 312 may be disposed so as to be spaced apart from the 1a member 311, and the side frame located on the other side (1 o'clock direction in FIG. 4) of the 1b member 312 may be spaced apart from the 1a member 311 and temporarily fixed so as to be disposed at the position corresponding to the corner portion 11b located on the other side, which is a part of the corner portion 11b formed on one surface of the battery case 11.

The thickness of the side frame of the 1b member 312 located on the other side in tight contact with the corner portion 11b may be greater than or equal to the thickness of the corner portion 11b.

In addition, when the first tight contact member 310 is brought into tight contact with one surface of the battery case 11 to apply pressing force thereto, it may be preferable for the other frames (an upper surface frame, a lower surface frame, and one side frame) of the 1b member 312, which are not in tight contact with the corner portion 11b, to have as small a thickness as possible such that the flat portion 11a of the battery case 11 is not locally excessively pressed thereby.

The second tight contact member 320 may be provided at one surface of the second tight contact plate 220 (10 o'clock direction in FIG. 4) so as to face the other surface of the battery case 11. In addition, the second tight contact member 320 may be moved toward the other surface of the battery case 11 together with the second tight contact plate 220 by the second pressing plate 120, and may be configured to be brought into tight contact with the corner portion 11b of the other surface of the battery case 11.

More specifically, the second tight contact member 320 may include a 2a member 321 and a 2b member 322, each being formed in a quadrangular frame shape.

First, the 2a member 321 may be fixed to the second tight contact plate 220 so as to be in tight contact with the corner portion 11b located on one side (7 o'clock direction in FIG. 4), which is a part of the corner portion 11b formed on the other surface (4 o'clock direction in FIG. 4) of the battery case 11. At this time, the 2a member 321 may be fixed to the second tight contact plate 220 via a second fixing member 323.

Specifically, the second fixing member 323 may be connected to the second tight contact plate 220 so as to fix the 2a member 321 to the second tight contact plate 220, and may be provided in plural. For example, one end of the second fixing member 323 may be connected to the 2a member 321 and the other end of the second fixing member may be connected to one surface of the second tight contact plate 220 such that the 2a member 321 is fixed to the second tight contact plate 220. In this case, the second fixing member 323 may, for example, be a wire member.

Accordingly, the 2a member 321 may be fixed to the second tight contact plate 220, and a side frame located on one side (7 o'clock direction in FIG. 4) of the 2a member 321 may be fixed at the position corresponding to the corner portion 11b located on one side, which is a part of the corner portion 11b formed on the other surface of the battery case 11.

The thickness of the side frame located on one side of the 2a member 321 in tight contact with the corner portion 11b may be greater than or equal to the thickness of the corner portion 11b. Here, the thickness of the corner portion 11b may be the thickness from the sealed portion S of the edge of the battery case 11 to the other surface of the first pocket portion of the battery case 11 (the thickness in the 12 to 6 o'clock direction in FIG. 3).

In addition, when the second tight contact member 320 is brought into tight contact with the other surface of the battery case 11 to apply pressing force thereto, it may be preferable for the other frames (an upper surface frame, a lower surface frame, and the other side frame) of the 2a member 321, which are not in tight contact with the corner portion 11b, to have as small a thickness as possible such that the flat portion 11a of the battery case 11 is not locally excessively pressed thereby.

In addition, the 2b member 322 may be brought into tight contact with the corner portion 11b located on the other side (1 o'clock direction in FIG. 4), which is a part of the corner portion 11b formed on the other surface (4 o'clock direction in FIG. 4) of the battery case 11, and may be movable in a longitudinal direction of the 2a member 321. Here, the longitudinal direction of the 2a member 321 corresponds to the overall length direction of the battery case 11.

The 2b member 322 may be moved in the longitudinal direction of the 2a member 321 so as to correspond to the length of the first pocket portion of the battery case 11 that receives the electrode assembly.

That is, the length of the second tight contact member 320 may be adjusted so as to correspond to the overall length of the first pocket portion of the battery case 11 through the distance between the 2a member 321 and the 2b member 322.

At this time, the 2b member 322 may be connected to a second connecting member 324 so as to be spaced apart from the 2a member 321. The second connecting member 324 may connect the 2b member 322 to the second tight contact plate 220, and may be provided in plural.

For example, one end of the second connecting member 324 may be connected to the 2b member 322, and the other end of the second connecting member may be connected to the other surface of the second tight contact plate 220. At this time, the 2b member 322 may be spaced apart from the 2a member 321 so as to correspond to the length of the other end of the second connecting member 324 that penetrates one surface of the second tight contact plate 220.

More specifically, for example, the second connecting member 324 may apply tensile force to the second connecting member 324 so as to correspond to the overall length of the first pocket portion in order to adjust the distance between the 2a member 321 and the 2b member 322. In addition, for example, a second fixing block (not shown) may be provided at the other end of the second connecting member 324 such that the distance between the 2a member 321 and the 2b member 322 of the second tight contact member 320 is temporarily fixed. In this case, the second connecting member 324 may, for example, be a wire member.

Of course, the present invention is no limited to the above configurations as long as it is possible to move, support, and temporarily fix the 1b member 312 using the first connecting member 314.

Accordingly, the 2b member 322 may be disposed so as to be spaced apart from the 2a member 321, and the side frame located on the other side (1 o'clock direction in FIG. 4) of the 2b member 322 may be spaced apart from the 2a member 321 and temporarily fixed so as to be disposed at the position corresponding to the corner portion 11b located on the other side, which is a part of the corner portion 11b formed on the other surface of the battery case 11.

The thickness of the side frame of the 2b member 322 located on the other side in tight contact with the corner portion 11b may be greater than or equal to the thickness of the corner portion 11b.

In addition, when the second tight contact member 320 is brought into tight contact with the other surface of the battery case 11 to apply pressing force thereto, it may be preferable for the other frames (an upper surface frame, a lower surface frame, and one side frame) of the 2b member 322, which are not in tight contact with the corner portion 11b, to have as small a thickness as possible such that the flat portion 11a of the battery case 11 is not locally excessively pressed thereby.

Also, in the secondary battery pressing apparatus according to the embodiment of the present invention, the 1a member 311 and the 2a member 321 may be located on one side of the battery case 11, the 1b member 312 and the 2b member 322 may be located on the other side of the battery case 11, and the first connecting member 314 and the second connecting member 324 may be adjusted on the other side to space the 1b member 312 and the 2b member 322 apart from the 1a member 311 and the 2a member 321, respectively. However, the present invention is not limited thereto, and the 1a member 311 and the 2a member 321 may be disposed at opposite positions, and the 1b member 312 and the 2b member 322 may be disposed at opposite positions.

Each of the pair of tight contact members 300 may be made of a shape-memory alloy. For example, the pair of tight contact members 300 may be brought into tight contact with the corner portions 11b located at one surface and the other surface of the battery case 11 by the pair of pressing plates 100, and may be deformed into a shape corresponding to the shape of the corner portions 11b by the pressing force applied by the pressing plates 100, thereby applying uniform pressing force to the corner portions 11b.

For example, the side frame of each of the pair of tight contact members 300 in tight contact with the corner portion 11b may be configured as a rectangular prism frame extending in the overall width direction of the corner portion 11b, or may be configured as a frame that encloses a part of the corner portion 11b and can be more easily deformed into a shape corresponding to the shape of the rounded corner portion 11b.

In addition, the length of each of the pair of tight contact members 300 in the overall width direction may be greater than or equal to the length of the battery case 11 in the overall width direction such that, when the pair of tight contact members 300 presses the corner portion 11b, the pair of tight contact plates 200 also presses one surface and the other surface of the battery case 11.

In addition, each of the pair of tight contact members 300 may be preferably made of a shape-memory alloy having high thermal conductivity. As an example, each of the pair of tight contact members 300 may be made of a shape-memory alloy including Cu, Zn, and Al materials, which have higher thermal conductivity than a titanium alloy. The pair of tight contact members 300 is brought into tight contact with the corner portions 11b, is deformed into a shape corresponding to the shape of the corner portions 11b, and then quickly returns to the original shape thereof when heated to a certain temperature.

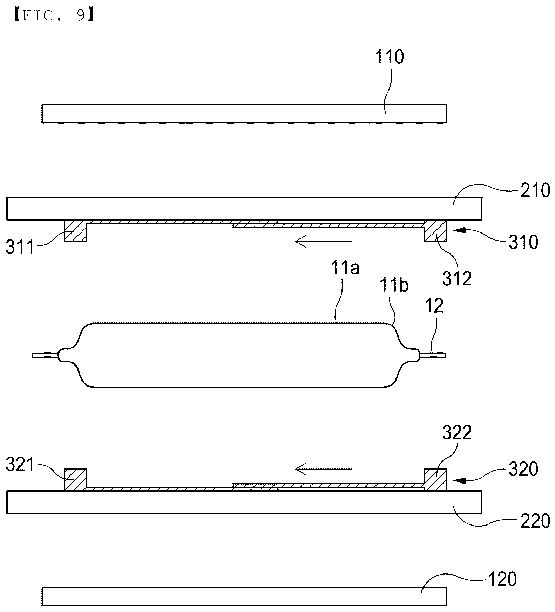

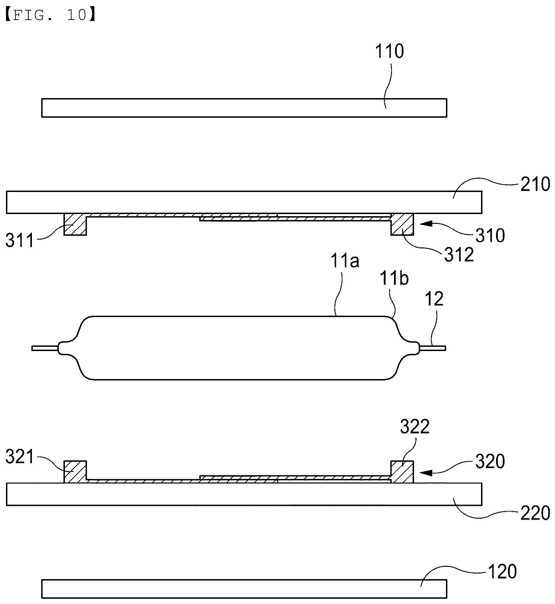

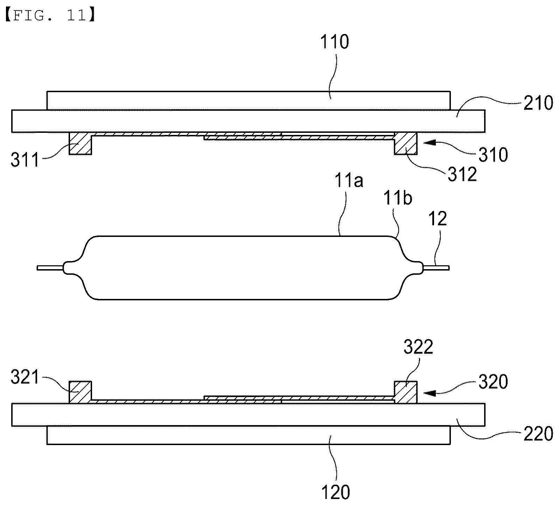

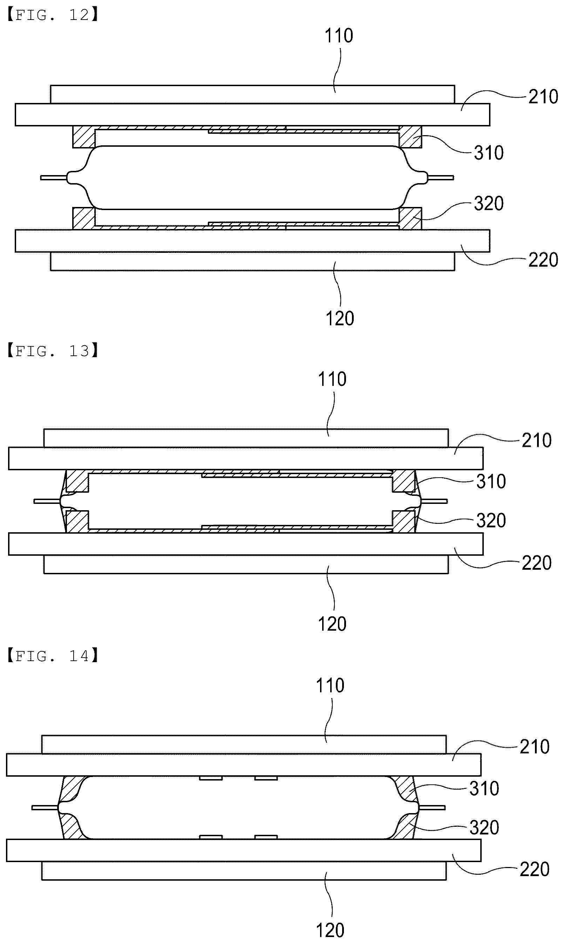

FIG. 9 is a view showing the state in which the secondary battery pressing apparatus according to the present invention is located on one side and the other side of the secondary battery, when viewed from above, and FIG. 10 is a view showing that the length of the tight contact member of the secondary battery pressing apparatus according to the present invention is varied so as to correspond to the length of the first pocket portion of the secondary battery, when viewed from above. In addition, FIG. 11 is a view showing that the pressing plate presses the tight contact plate and the tight contact member in the secondary battery pressing apparatus according to the present invention, when viewed from above, and FIG. 12 is a view showing that the tight contact member of the secondary battery pressing apparatus according to the present invention is brought into tight contact with the corner portion of the battery case of the secondary battery, when viewed from above. In addition, FIG. 13 is a view showing that the tight contact member of the secondary battery pressing apparatus according to the present invention is pressed and deformed at the corner portion of the battery case, when viewed from above, and FIG. 14 is a sectional view taken along line I-I shown in FIG. 4, illustrating that the tight contact member of the secondary battery pressing apparatus according to the present invention is pressed and deformed at the corner portion of the battery case, when viewed from above.

Referring to FIGs. 4 to 14, a secondary battery pressing method using the secondary battery pressing apparatus according to the present invention includes the steps of (S1) locating a secondary battery 10 between the pair of tight contact plates 200, on an inner surface of each of which the tight contact member 300 is provided, and (S2) moving the pair of pressing plates 100 to press the secondary battery 10.

In addition, the method may further include heating the pair of tight contact members 300 to a preset first temperature range, such as a range of 90°C to 110°C, to shape-memory process the pair of tight contact plates 200 before step (S1).

Also, in step (S2), the secondary battery 10 may be pressed while heating the pair of tight contact plates 200 to a second temperature range, such as a range of 50°C to 80°C, which is lower than the first temperature range at which the pair of tight contact members 300 is shape-memory processed.

Also, in step (S2), the pair of pressing plates 100 is moved toward the secondary battery 10, and the pair of tight contact plates 200 and the pair of tight contact members 300 may also be moved in response to the movement of the pair of pressing plates 100.

Also, in step (S2), the first pressing plate 110 is moved to the other side (6 o'clock direction in FIG. 12) in order to press one surface (12 o'clock direction in FIG. 11) of a battery case 11. At this time, the first pressing plate 110 may press the first tight contact plate 210 and the first tight contact member 310, and the first tight contact plate 210 and the first tight contact member 310 may be moved to the other side together.

Also, in step (S2), the first pressing plate 110 may press one surface (12 o'clock direction in FIG. 14) of the first tight contact plate 210 and at the same time press the first tight contact member 310 such that the first tight contact member 310 can press a corner portion 11b of one surface of the battery case 11.

At this time, since the first tight contact member 310 is pressed with a shape deformed so as to correspond to the shape of the corner portion 11b of one surface of the battery case 11, uniform pressing force may be applied to the corner portion 11b.

Also, in step (S2), the first tight contact plate 210 may be pressed by the first pressing plate 110 to apply pressing force to one surface of the battery case 11.

Also, in step (S2), the second pressing plate 120 is moved to one side (12 o'clock direction in FIG. 12) in order to press the other surface (6 o'clock direction in FIG. 11) of the battery case 11. At this time, the second pressing plate 120 may press the second tight contact plate 220 and the second tight contact member 320, and the second tight contact plate 220 and the second tight contact member 320 may be moved to one side together.

Also, in step (S2), the second pressing plate 120 may press the other surface (6 o'clock direction in FIG. 14) of the second tight contact plate 220 and at the same time press the second tight contact member 320 such that the second tight contact member 320 can press the corner portion 11b of the other surface of the battery case 11.

At this time, since the second tight contact member 320 is pressed with a shape deformed so as to correspond to the shape of the corner portion 11b of the other surface of the battery case 11, uniform pressing force may be applied to the corner portion 11b.

Also, in step (S2), the second tight contact plate 220 may be pressed by the second pressing plate 120 to apply pressing force to the other surface of the battery case 11.

After step (S2), e.g., after an activation process, in order to press a new secondary battery, the first tight contact member 310 and the second tight contact member 320 may be heated to the first temperature range to restore the shapes of the first tight contact member 310 and the second tight contact member 320 to the original shapes thereof.

In addition, the pressing method may further include a step of varying the length of each of the pair of tight contact members 300 so as to correspond to the length of a first pocket portion of the battery case 11 configured to receive an electrode assembly before step (S2). Here, the length of the first pocket portion is the length of the first pocket portion in the overall length direction.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Secondary battery
11: Battery case
11a: Flat portion 11b: Corner portion
12: Electrode lead
100: Pressing plate
110: First pressing plate
120: Second pressing plate
200: Tight contact plate
210: First tight contact plate
220: Second tight contact plate
300: Tight contact member
310: First tight contact member
311: 1a member 312: 1b member
313: First fixing member 314: First connecting member
320: Second tight contact member
321: 2a member 322: 2b member
323: Second fixing member 324: Second connecting member

## Claims

1. A secondary battery pressing apparatus for pressing a secondary battery comprising a battery case configured to receive an electrode assembly having a pair of electrode leads located opposite each other and a sealed portion provided at an edge of the battery case, the secondary battery pressing apparatus comprising:
a pair of pressing plates located on one side and the other side of the battery case;
a pair of tight contact plates configured to be brought into tight contact with the battery case by the pair of pressing plates; and
a pair of tight contact members configured to be brought into tight contact with a corner portion of the battery case by the pair of pressing plates.

2. The secondary battery pressing apparatus according to claim 1, wherein each of the pair of tight contact members is made of a shape-memory alloy.

3. The secondary battery pressing apparatus according to claim 2, wherein the shape-memory alloy comprises Cu, Zn, and Al materials.

4. The secondary battery pressing apparatus according to claim 2, wherein
the pair of tight contact plates comprises a first tight contact plate and a second tight contact plate located facing one surface and the other surface of the battery case, respectively, and
the pair of tight contact members comprises a first tight contact member and a second tight contact member provided respectively at the first tight contact plate and the second tight contact plate so as to face the one surface and the other surface of the battery case, respectively.

5. The secondary battery pressing apparatus according to claim 4, wherein the first tight contact member comprises:
a 1a member fixed to the first tight contact plate so as to be in tight contact with the corner portion located on one side, which is a part of the corner portion formed on the one surface of the battery case; and
a 1b member configured to be brought into tight contact with the corner portion located on the other side, which is a part of the corner portion formed on the one surface of the battery case, the 1b member being movable in a longitudinal direction of the 1a member.

6. The secondary battery pressing apparatus according to claim 5, wherein
each of the 1a member and the 1b member is formed in a quadrangular frame shape, and
a thickness of a side frame of each of the 1a member and the 1b member in tight contact with the corner portion is greater than or equal to a thickness of the corner portion.

7. The secondary battery pressing apparatus according to claim 5, wherein the first tight contact member further comprises:
a plurality of first fixing members connected to the first tight contact plate, the plurality of first fixing members being configured to fix the 1a member to the first tight contact plate; and
a plurality of first connecting members configured to connect the 1b member to the first tight contact plate.

8. The secondary battery pressing apparatus according to claim 5, wherein the second tight contact member comprises:
a 2a member fixed to the second tight contact plate so as to be in tight contact with the corner portion located on the one side, which is a part of the corner portion formed on the other surface of the battery case; and
a 2b member configured to be brought into tight contact with the corner portion located on the other side, which is a part of the corner portion formed on the other surface of the battery case, the 2b member being movable in a longitudinal direction of the 2a member.

9. The secondary battery pressing apparatus according to claim 8, wherein
each of the 2a member and the 2b member is formed in a quadrangular frame shape, and
a thickness of a side frame of each of the 2a member and the 2b member in tight contact with the corner portion is greater than or equal to a thickness of the corner portion.

10. The secondary battery pressing apparatus according to claim 8, wherein the second tight contact member further comprises:
a plurality of second fixing members connected to the second tight contact plate, the plurality of second fixing members being configured to fix the 2a member to the second tight contact plate; and
a plurality of second connecting members configured to connect the 2b member to the second tight contact plate.

11. The secondary battery pressing apparatus according to claim 2, wherein
the pair of tight contact plates comprises a first tight contact plate configured to press the one surface of the battery case and a second tight contact plate configured to press the other surface of the battery case, and
each of the first tight contact plate and the second tight contact plate is made of a metal comprising an aluminum material.

12. A secondary battery pressing method using the secondary battery pressing apparatus according to any one of claims 1 to 11, the secondary battery pressing method comprising:
(S1) locating a secondary battery between the pair of tight contact plates (200), on inner surfaces of which the tight contact members are provided, respectively; and
(S2) moving the pair of pressing plates to press the secondary battery.

13. The secondary battery pressing method according to claim 12, further comprising heating the pair of tight contact members to a preset first temperature range to shape-memory process the pair of tight contact members before step (S1).

14. The secondary battery pressing method according to claim 13, wherein, in step (S2), heating is performed to a second temperature range lower than the first temperature range.

15. The secondary battery pressing method according to claim 14, further comprising varying a length of each of the tight contact members so as to correspond to a length of a first pocket portion of a battery case configured to receive an electrode assembly before step (S2).
